# EUROPEAN PATENT APPLICATION

(11) **EP 1 790 907 A1**
(43) Date of publication of application: **30.05.2007**
(21) Application number: 05780366.0
(22) Date of filing: 17.08.2005
(51) Int. Cl.: F23G 7/05, B63B 25/08, B63B 35/32, F23D 11/16, F23K 5/12

(54) **METHOD OF TREATING OIL/WATER MIXTURE**

(30) Priority: 17.08.2004 JP 2004237733
(71) Applicant: Bio Media Co. Ltd., Chiyoda-ku, Tokyo 1010021 (JP); Hashiba, Tomohiko, Chiyoda-ku, Tokyo 1010021 (JP)
(72) Inventor: HASHIBA, Tomohiko, Bio Media Co., Ltd., Tokyo 1010021 (JP)
(74) Representative: Epping, Wilhelm
(86) International application number: PCT/JP2005/015008
(87) International publication number: WO 2006/019113

(57) **Abstract**

Oil/water mixture recovered from sea surface, etc. is emulsified without the use of any emulsifier and subjected to combustion. Boat (300) is equipped with spilled oil recovery unit (310) for recovering oil having been spilled onto natural sea area; emulsification unit (100) devised so that while discharging through a liquid discharge nozzle any oil/water mixture (121) having been recovered by the spilled oil recovery unit (310), the oil/water mixture is crushed by a high-speed airstream emitted through a gas emission nozzle disposed around the liquid discharge nozzle to thereby produce an oil/water emulsion; and combustion unit (200) capable of combustion of the emulsion produced by the emulsification unit (100

## Description

### Technical Field

The present invention relates to technology for combustion treatment of an oil/water mixture recovered from the ocean's surface and similar areas.

### Prior Art

There are many technologies that use emulsions of mixtures of waste oil or heavy oil and water as fuel (refer to Patent References 1, 2, 3, and similar publications).
By means of each of these technologies, an emulsion of oil and water is produced by agitation treatment, or similar treatment of oil and water mixed together with an emulsifier added (surfactant, aqueous polymer, and similar emulsifiers), and the emulsifier is indispensable to obtaining an emulsion capable of long-term retention of a stable mixed state. Consequently, large amounts of emulsifier are needed when a large volume of an oil/water mixture, such as crude oil recovered from the ocean's surface, is emulsified and subjected to combustion treatment by the prior art.
Patent Reference 1: JP Unexamined Patent Publication (Kokai) 2001-139964
Patent Reference 2: JP Unexamined Patent Publication (Kokai) 8-277396
Patent Reference 3: JP Unexamined Patent Publication (Kokai) 2002-98325
Patent Reference 4: JP Unexamined Patent Publication (Kokai) 11-6615

### Disclosure of the Invention

### Problems to Be Solved by the Invention

An object of the present invention is to provide a method for treating an oil/water mixture and an apparatus for treating an oil/water mixture with which it is possible to emulsify and subject to combustion treatment an oil/water mixture recovered from the ocean's surface and similar areas without using an emulsifier. Another object of the present invention is to provide a boat with which it is possible to recover oil spilled onto the ocean's surface and similar areas, to emulsify the oil/water mixture without using an emulsifier, and to subject the product to combustion treatment on site.

### Means for Solving Problems

In order to solve the above-mentioned problems, the method of treating an oil/water mixture of the present invention is one in which an oil/water emulsion is produced by discharging an oil/water mixture wherein oil and water coexist from a liquid discharge nozzle as it is being crushed by a high-speed air current sprayed from an air jet orifice disposed around the liquid discharge nozzle, and this emulsion is subjected to combustion treatment by a combustion unit.

By means of the method for treating an oil/water mixture of the present invention, preferably the air jet orifice is formed around the liquid discharge nozzle in order to generate, from the high-speed air current, an eddy that will flow such that it encloses the oil/water mixture discharged from the liquid discharge nozzle.

Preferably the combustion unit is an internal combustion engine, turbine, or boiler. Moreover, preferably the water/oil mixture is a liquid that has been recovered by a boat, and the combustion unit is an internal combustion engine, turbine, or boiler loaded on the boat that has recovered the water/oil mixture.

Moreover, in order to solve the above-mentioned problems, the apparatus for treating an oil/water mixture is characterized in that it comprises an emulsification unit for producing an oil/water emulsion by discharging an oil/water mixture wherein oil and water coexist from a liquid discharge nozzle as it is being crushed by a high-speed air current sprayed from an air jet orifice disposed around the liquid discharge nozzle, and a combustion unit for combustion treatment of the emulsion produced by the emulsification unit.

Preferably the air jet orifice of the apparatus for treating an oil/water mixture of the present invention is formed around the liquid discharge nozzle in order to generate, from the high-speed air current, an eddy that will flow such that it encloses the oil/water mixture discharged from the liquid discharge nozzle.

Moreover, preferably, the above-mentioned combustion unit is an internal combustion engine, turbine, or boiler.

Preferably, the above-mentioned internal combustion engine is an automobile engine, the above-mentioned turbine is a turbine for driving a generator (steam turbine or air turbine), and the above-mentioned boiler is a steam generator for feeding high-pressure steam to a steam turbine.

Moreover, in order to solve the above-mentioned problems, the boat of the present invention comprises a spilled oil recovery unit for the recovery of oil spilled onto natural waters as an oil/water mixture; an emulsification unit for producing an oil/water emulsion by discharging the oil/water mixture recovered by the spilled oil recovery unit from a liquid discharge nozzle as it is being crushed by a high-speed air current sprayed from an air jet orifice disposed around the liquid discharge opening; and a combustion unit for combustion treatment of the emulsion produced by the emulsification unit.

Preferably, the air jet orifice of the boat of the present invention is formed around the liquid discharge nozzle in order to generate, from the high-speed air current, an eddy that will flow such that it encloses the oil/water mixture discharged from the liquid discharge nozzle.

### Effect of the Invention

By means of the method and apparatus for treating an oil/water mixture of the present invention, it is possible to produce an emulsion capable of long-term retention of a stable mixed state by discharging an oil/water mixture from a liquid discharge nozzle as it is being crushed by a high-speed air current sprayed from an air jet orifice disposed around the liquid discharge nozzle, and then to subject this emulsion to combustion treatment by a combustion unit; therefore, it is possible to emulsify and subject to combustion treatment an oil/water mixture recovered from the ocean's surface and similar areas without using an emulsifier.

By means of the boat of the present invention, it is possible to produce an emulsion capable of long-term retention of a stable mixed state by recovering oil spilled onto natural waters as an oil/water mixture and discharging this oil/water mixture from a liquid discharge nozzle as it is being crushed by a high-speed air current sprayed from an air jet orifice disposed around the liquid discharge nozzle, and then to subject this emulsion to combustion treatment by a combustion unit; therefore, it is possible to emulsify and subject to combustion treatment an oil/water mixture recovered from the ocean's surface and similar areas without using an emulsifier.

### Brief Description of the Drawings

[Figure 1] is a block drawing showing an embodiment of the treatment apparatus for performing the method of treating an oil/water mixture of the present invention.
[Figure 2] is a drawing showing an embodiment of the emulsification unit.
[Figure 3] (a) is a plan view showing an embodiment of a double-fluid nozzle, and (b) is a cross section showing an embodiment of a double-fluid nozzle.
[Figure 4] is a front view showing an embodiment of a double-fluid nozzle.
[Figure 5] is a block diagram showing a structural example of a control unit.
[Figure 6] is a block diagram showing a structural example of a combustion unit.
[Figure 7] is a drawing showing an embodiment of the boat of the present invention.

### List of Reference Numerals

- 1.: Treatment unit
- 100.: Emulsification unit
- 110.: Starting material feed system
- 111.: Starting material tank
- 112.: Starting material tank
- 113.: Starting material tank
- 121.: Recovered oil (oil/water mixture)
- 122.: Heavy oil
- 123.: Water
- 124.: Emulsion
- 125.: Fuel container
- 146.: Compressor
- 151.: Liquid feed opening
- 152.: Air feed opening
- 160.: Double-fluid nozzle
- 161.: Liquid discharge nozzle
- 162.: Air jet orifice
- 180.: Control unit
- 200.: Combustion unit
- 300.: Boat
- 310.: Oil spill recovery unit
- 311.: Suction pipe
- 312.: Oil spill suction unit
- 313.: Storage tank
- 315.: Recovered oil transfer unit
- 320.: Treatment unit

### Preferred Embodiments of the Invention

Preferred embodiments of the present invention will now be described while referring to the drawings. The same reference numerals are used and a description is not given for the parts that are the same or essentially the same in multiple drawings.

### [Embodiment 1]

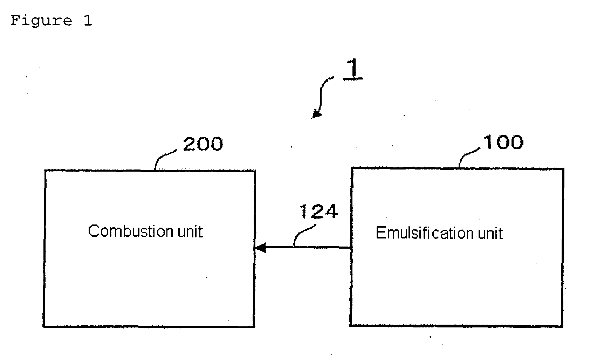

Figure 1 is a block diagram showing an embodiment of the treatment unit for performing the method of treating an oil/water mixture of the present invention. A treatment unit 1 comprises an emulsification unit 100 and a combustion unit 200.

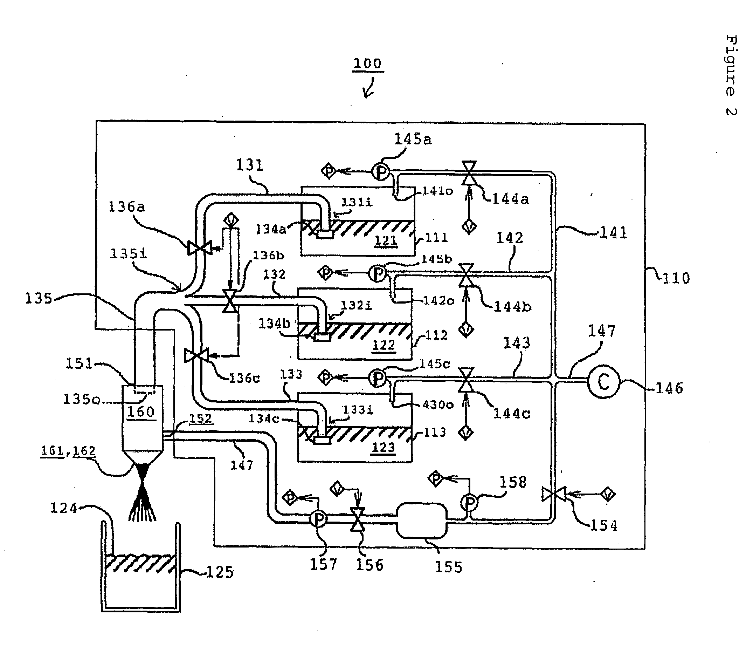

Figure 2 is a structural drawing showing an embodiment of emulsification unit 100. Emulsification unit 100 comprises a starting material feed system 110 and a double-fluid nozzle 160.

Starting material feed system 110 comprises first through third starting material tanks 111 through 113. First starting material tank 111 is the starting material tank for storing recovered oil (oil/water mixture) 121 in a state of coexistence of seawater and heavy oil recovered from the ocean's surface and similar areas. Second starting material tank 112 is the starting material tank for storing heavy oil 122 for addition to recovered oil 121. Third starting material tank 113 is the starting material tank for storing water 123 for addition to recovered oil 121. These starting material tanks 111 through 113 are all sealable, pressure-resistant containers, and they are sealed after introducing contained liquids 121 to 123 prior to mixing the starting materials.

Starting material feed pipes 131 through 133 are connected to the respective starting material tanks 111 through 113 such that they pass through the side of the tank. Inlets 131i through 133i of the respective starting material feed pipes 131 through 133 are disposed near the base inside the respective tanks 111 through 113. Strainers 134a through 134c are attached to the respective inlets 131i through 133i.

Outlets 131o through 133o of starting material feed pipes 131 through 133 are all connected to inlet 135i of a single confluence pipe 135 having a larger inner diameter than the outlets. Outlet 135o of confluence pipe 135 is connected to a liquid feed opening 151 of a double-fluid nozzle 160. Electromagnetic variable flow metering valves 136a through 136c for adjusting the flow rate are disposed somewhere along the respective starting material feed pipes 131 through 133.

Moreover, pressure pipings 141 through 143 are connected to the respective tanks 111 through 113 such that they pass through the respective tank top. Outlets 141o through 143o of the respective pressure pipings 141 through 143 are disposed near the top surface of the respective tanks 111 through 113.

Pressure pipings 141 through 143 are pipings for introducing compressed air to the top space (space above contained liquids 121 through 123) inside the respective starting material tanks 111 through 113. The upstream-most tip of pressure pipings 141 through 143 is connected to the compressed air exhaust opening of a compressor 146 via a base pipe 147*. Electromagnetic valves 144a through 144c are disposed somewhere along the respective pressure pipings 141 through 143, and air pressure sensors 145a through 145c are disposed in the piping in order to detect the air pressure inside the space at the top of starting material tanks 111 through 113.

An air feed pipe 147* is connected to an air feed opening 152 of double-fluid nozzle 160. The upstream-most end of air feed pipe 147 is connected to the compressed air exhaust opening of compressor 146 via base pipe 147. In essence, base pipe 147 branches into four parts, and three of these branches are connected to starting material tanks 111 through 113 as pressure pipings 141 through 143, while the other pipe branch is connected to air feed opening 152 of double-fluid nozzle 160 as air feed pipe 147. An electromagnetic valve 154, a compressed air reserve 155, a pressure regulator 156, and an air pressure sensor 157 are disposed somewhere inside air feed pipe 147 in this order from the upstream to the downstream side. An air pressure
* The number 147 is given as both base pipe 147 and air feed pipe 147, in both the Japanese description and the drawings-Translator's note.
sensor 158 for detecting the air pressure inside the reserve is disposed directly upstream of compressed air reserve 155.

Compressor 146 is for generating compressed air. Compressed air discharged from compressor 146 is directed through base pipe 147 to pressure pipings 141 through 143 and air feed pipe 147. Air feed pipe 147 is the piping for introducing compressed air to double-fluid nozzle 160. The compressed air fed to air feed pipe 147 is allowed to accumulate in compressed air reserve 155, brought to the desired pressure, and introduced to double-fluid nozzle 160.

A liquid discharge nozzle 161, which communicates with liquid feed opening 151, and an air jet orifice 162, which communicates with air feed opening 152, are disposed at the tip part of double-fluid nozzle 160. Air jet orifice 162 is formed around liquid discharge nozzle 161.

The three liquids that have been fed through confluence pipe 135 to liquid feed opening 151 of double-fluid nozzle 160, that is, recovered oil 121, heavy oil 122, and water 123, are discharged from liquid discharge nozzle 161 in coexistence with one another but without being uniformly mixed. However, a high-speed eddy of air sprayed from air jet orifice 162 is formed at the front (the bottom in the figure) of double-fluid nozzle 160, and starting materials 121 through 123 that have been discharged in a state of coexistence are crushed into microparticulate form by this high-speed eddy and sprayed into a fuel container 125 disposed underneath double-fluid nozzle 160 as an emulsion 124 in atomized form, wherein the oil component and the water component have been uniformly mixed together.

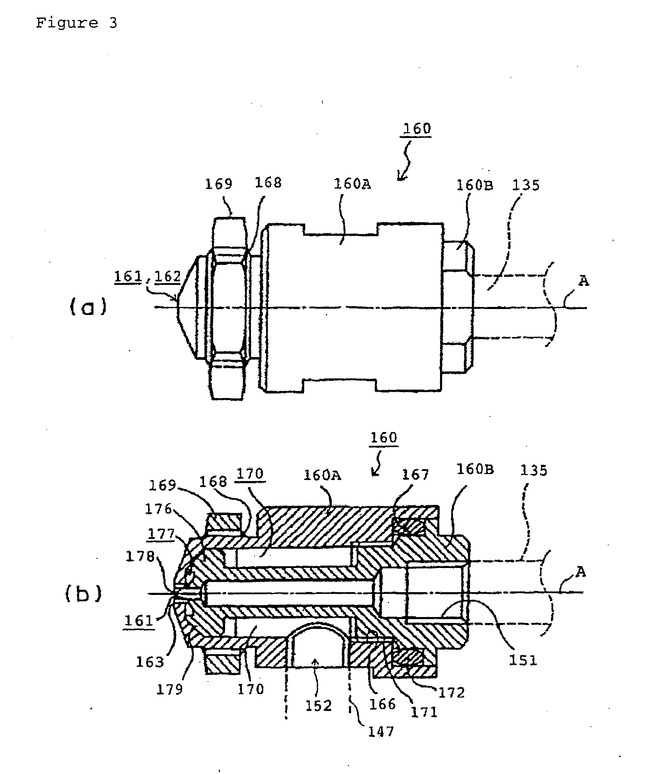

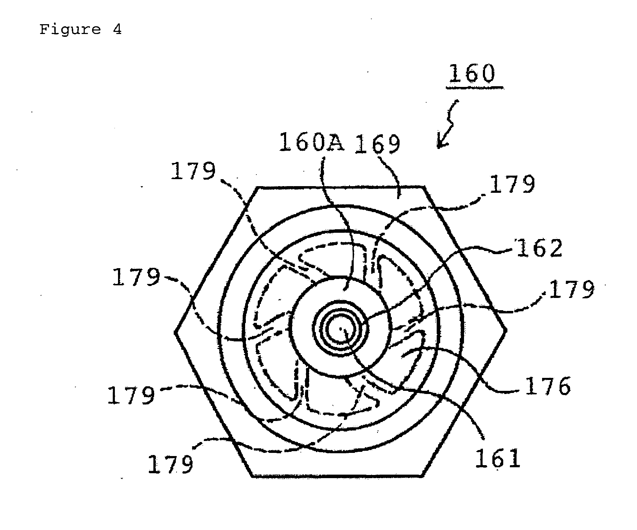

Next, the structure of double-fluid nozzle 160 will be described while referring to Figures 3 and 4.

Double-fluid nozzle 160 is a structure wherein a substantially cylindrical core 160B is inserted and screwed inside a substantially cylindrical hollow casing 160A. Casing 160A is made by machining of a metal material such as stainless steel or brass; an opening 163, which has a round horizontal cross section, the center of which is aligned with central axis A of double-fluid nozzle 160, is formed in the tip of the casing to form the outside profile of air feed opening 152. Air feed opening 152 is made in the side of casing 160A such that it has an axis perpendicular to central axis A of double-fluid nozzle 160. A female screw groove is cut around the inside surface of air feed opening 152 such that air feed pipe 147 can be joined by being screwed into this groove. A female screw groove 166 is formed in the base end part on the inside surface of casing 160A, and a step part 167 having a slightly larger inner diameter is formed in the part in the direction of the base end. Moreover, a female screw groove 168 is formed in the outside surface at the tip part of casing 160A and an anchoring nut 169 for attaching double-fluid nozzle 160 can be screwed into place.

Core 160B is made by machining a metal material that is the same as or different than above-mentioned casing 160A. The inside is hollowed out along central axis A. Moreover, the outside diameter of the core is a dimension such that it will fit snugly inside the hollow hole of casing 160A, while the outer diameter substantially near the center part in the direction of length is formed somewhat thin such that a round cylindrical space 170 remains in between the core and the inside surface of casing 160A. This space 170 communicates with air feed opening 152 disposed in casing 160A. A female screw groove 171 is cut into the outside periphery slightly underneath core 160B in the figure, and core 160B is anchored inside casing 160A by being screwed into the female screw groove 166. Moreover, the part of the core on the base end side has a somewhat larger diameter than the same screw groove 171, and an O-ring seal 172 is sandwiched between above-mentioned step part 167 and the core to retain the airtight quality of space 170. Liquid feed opening 151 is formed at the base end part of core 160B. A female screw groove is cut around the inside surface of liquid feed opening 151 and the tip of confluence pipe 135 is joined by being screwed into this groove. Liquid discharge nozzle 161, which communicates from liquid feed opening 151 through the hollow space inside, is open at the top part of core 160B, and the wider part of the cone shape around the periphery of the nozzle forms a spiral object 176. Moreover, an eddy chamber 177 is formed between the tip surface of spiral object 176 and the inside surface at the tip of casing 160A. There is a space between tip surface 178 of core 162, which forms eddy chamber 177, and opening 163 of casing 160A.

Referring to the front view of double-fluid nozzle 160 shown in Figure 4, round liquid discharge nozzle 161 is disposed in the center and annular air jet orifice 162 is disposed around this nozzle. Air jet orifice 162 communicates with multiple corkscrew grooves that extend in a vortex formed on the circular cone surface of spiral object 176 that is disposed inside casing 160A.

The compressed air fed from air feed opening 164* passes through space 170 and is compressed to become a high-speed air current-when it passes through a spiral groove 179 having a small cross sectional area that is formed in spiral object 176. This high-speed air current becomes a vortex-like rotating air current on the inside of eddy current
* sic; 152?-Trans. Note. chamber 177 and is sprayed from the constricted annular air jet orifice 162 to form a high-speed eddy of air in front of double-fluid nozzle 160. This eddy is formed into a circular cone with a fine tip such that the front position that contacts the tip of casing 160A becomes the focal point.

Unmixed liquid that has been conveyed from starting material tanks 111 through 113 passes through confluence pipe 135 and is fed to liquid feed opening 151. The unmixed liquid that has been fed to liquid feed opening 151 passes through the hollow part of core 160B and is discharged from liquid discharge nozzle 161. It is then crushed into microparticles by the high-speed eddy of air sprayed from air jet orifice 162, the particles are forced together as a mixture with the whirling of the eddy, and the product is emitted in atomized form toward the front of double-fluid nozzle 160 as a mixture of uniformly mixed microparticles. It should be noted that the inner diameter of liquid discharge nozzle 161 is somewhat smaller than the inner diameter of the hollowed-out part of core 160B, but when there are clogging concerns, the inner diameter of liquid discharge nozzle 161 is preferably the same diameter as the inner diameter of the hollowed-out part of the core.

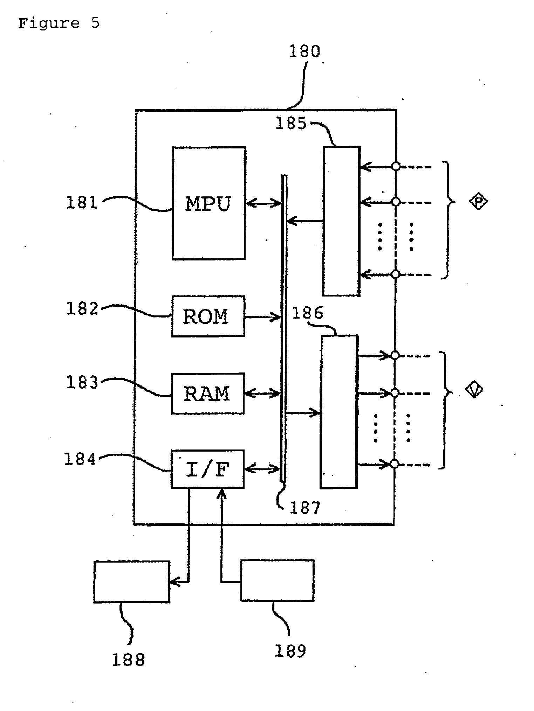

Emulsification unit 100 is controlled by a control unit 180 shown in Figure 5. Control unit 180 houses an MPU 181, an EP-ROM 182, a RAM 183, an interface unit 184, an A/D converter 185, and a drive unit 186, and these are connected together via a bus line 187. The programs executed by MPU 181 are stored in EP-ROM 182. RAM 183 is used in the operating region when MPU 181 executes a program, etc. A display 188, such as a CRT, is connected to the output port of interface unit 184, and an input unit 189, such as a keyboard, is connected to the input port.

Each air pressure sensor of emulsification unit 100, essentially air pressure sensors 145a through 145c and 157, is connected to the input of A/D converter 185, and the analog value of the air pressure detected by these air pressure sensors is converted to a digital value. Moreover, the converted digital air pressure value is read by MPU 181 via bus line 187.

Each electromagnetic drive valve of emulsification unit 100, essentially electromagnetic variable flow metering valves 136a through 136c and electromagnetic valves 144a through 144c and 54, is connected to the output of drive unit 186. Drive unit 186 adjusts the current for the electromagnetic operation of these valves and turns them on and off in accordance with commands from MPU 181.

When operating the emulsification unit 100, the operator specifies the mixture ratio of the three liquids, essentially, recovered oil 121, heavy oil 122, and water 123, that is to be introduced to the three starting material tanks 111 through 113 on an input screen displayed on display 188. The operator determines the mixture ratio of the three liquids in accordance with the ratio of oil and water in the recovered oil 121, etc., and inputs that ratio in a numerical value from input unit 189. After the mixture ratio of the three liquids has been input, MPU 181 stores that value in RAM 183.

The operator introduces each pre-determined liquid to the respective starting material tanks 111 through 113, tightly closes the lid of the same tank, and then sends the "begin mixing" command from input device 189. When this command is received, MPU 181 sends this command to drive unit 186, opens electromagnetic valve 144a, monitors the output of air pressure sensor 145a via A/D converter 185, fills compressed air from compressor 146 into the top space of starting material tank 111, and waits until a pre-determined pressure is reached. Under this initial state, the other electromagnetic valves of emulsification unit 110 are closed. Once it is confirmed by air pressure sensor 145a of starting material tank 111 that the internal pressure of this tank has risen to a pre-determined air pressure, MPU 181 closes electromagnetic valve 144a and opens electromagnetic valve 144b from compressor 146 to starting material tank 112, causing the air pressure inside starting material tank 112 to rise to a pre-determined pressure. There are cases in which the pressure at this time is different from the pressure of starting material tank 111. This is because the viscosity of oil/water mixture 121 held inside starting material tank 111 and that of heavy oil 122 held inside starting material tank 112 are different, and the quantity of flow that should be mixed (essentially, that should be discharged from the tank) is very different. When air pressure sensor 145b of starting material tank 112 confirms that the internal pressure of this tank has risen to a pre-determined air pressure, MPU 181 closes electromagnetic valve 144b and opens electromagnetic valve 144c from compressor 146 to starting material tank 113, causing the air pressure inside starting material tank 113 to rise to a pre-determined pressure. There are cases in which the pressure at this time differs from that of starting material tanks 111 and 112. Conditions for starting the mixing are complete once electromagnetic valves 144a through 144c have been opened in succession in this manner and the internal pressure of starting material tanks 111 through 113 has been raised to a pre-determined pressure, and further, electromagnetic valve 54 is opened and the internal pressure of compressed air reserve 155 has been raised to a pre-determined pressure,

After adjusting the conditions for starting the mixing, MPU 181 opens pressure regulating valve 156. When this is done, compressed air is fed from compressed air reserve 155 to air feed opening 152 of double-fluid nozzle 160 and a high-speed eddy of air is sprayed from air jet orifice 162 at the tip of double-fluid nozzle 160. Next, electromagnetic variable flow metering valves 136a through 136c are opened to a specific valve lift. As a result, liquids 121 through 123 stored in starting material tanks 111 through 113 are fed from starting material feed pipes 131 through 133 through confluence pipe 135 to starting material* feed opening 151 of double-fluid nozzle 160 at a mixture ratio corresponding to the valve lift of the three electromagnetic variable flow metering valves 136a through 136c, and discharged in a coexisting state from liquid discharge nozzle 161 at the tip of double-liquid nozzle 160. Moreover, liquids 121 through 123 that have been discharged in front of double-liquid nozzle 160 are crushed into microparticles by the high-speed eddy of air that is also formed in front of double-fluid nozzle 160, thoroughly mixed together under the current of the eddy to become a uniform
* sic; liquid?-Trans. Note. oil/liquid mixture, essentially an emulsion, and emitted to fuel container 125.

The liquid level of liquids 121 through 123 inside starting material tanks 111 through 113 drops as the above-mentioned oil mixing treatment proceeds, and there is a corresponding increase in the volume of the space at the top inside starting material tanks 111 through 113 and a reduction in air pressure of this part. This pressure is continuously detected by air pressure sensors 145a through 145c and the values found are sent to MPU 181. MPU 181 continuously monitors the values detected by air pressure sensors 145a through 145c and when a value drops below the optimal value, the relevant electromagnetic valve 144a through 144c of the relevant starting material tank 111 through 113 is switched to an open state for the appropriate time and the air pressure inside starting material tanks 111 through 113 is kept at the pre-determined optimal value. Similarly, MPU 181 keeps the pressure of compressed air inside compressed air reserve 155 at the optimal value by controlling an electromagnetic valve 26.

By means of the above-mentioned operation, emulsion 124 having the oil/liquid mixture ratio specified by the operator is produced and kept inside fuel container 125. This emulsion 124 is produced by discharging an oil/water mixture that is a mixture of recovered oil 121, heavy oil 122, and water 123 from liquid discharge nozzle 161 of double-fluid nozzle 160 as it is being crushed by a high-speed air current sprayed from air jet orifice 162 disposed around liquid discharge nozzle 161; therefore, the water and oil are completely uniformly mixed and a long-term retention of this stable mixed state of water and oil is possible.

Emulsion 124 kept inside fuel container 125 is fed through a fuel feed system, which is not illustrated, to combustion unit 200. Combustion unit 200 is a conventional device comprising a fuel pump 201, a fuel spray nozzle 202, and an igniter 203. Emulsion 124 fed from fuel tank 125 to combustion unit 200 is conveyed to fuel spray nozzle 202 by fuel pump 201 and sprayed from the tip of nozzle 202. Igniter 203 operates and ignites emulsion 124 in synchronization with this spray timing. As a result, the combustion of emulsion 124 begins. Igniter 203 operates only when combustion starts. The combustion of emulsion 124 by combustion unit 200 is continued by continuing to feed emulsion 124 from fuel tank 125 to combustion unit 200.

As described above, by means of this apparatus 1 for treating an oil/water mixture, it is possible to emulsify oil recovered from the ocean's surface, wherein heavy oil and ocean water are in a state of coexistence, at the appropriate oil/water mixture ratio by adding heavy oil 122 and water 123 and to subject the emulsion to combustion treatment. A surfactant is not needed to produce emulsion 124; therefore, recovered oil 121 can be treated at a very low cost.

By means of the above-mentioned example, the oil/water ratio was adjusted by gradually adding the appropriate amounts of heavy oil 122 and water 123 to recovered oil 121 and these liquids were mixed with double-fluid nozzle 160, but when the oil/water ratio of recovered oil 121 is already within the appropriate range for fuel, recovered oil 121 should be mixed with double-fluid nozzle 160 without adding heavy oil 122 or water 123. Moreover, it is also possible to add the appropriate amount of either of heavy oil 122 or water 123 alone in accordance with the oil/water ratio of recovered oil 121.

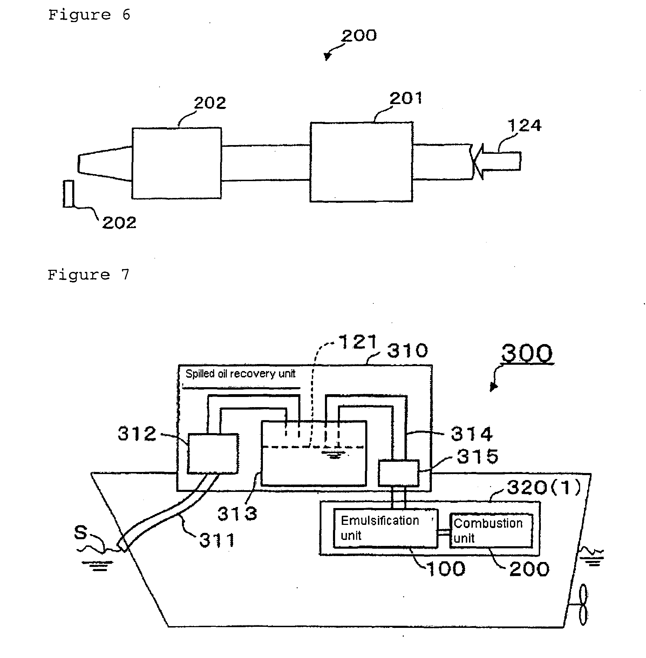

[Embodiment 2] Figure 7 is a drawing showing an embodiment of the boat of the present invention. A spilled oil recovery unit 310 for recovering oil that has spilled on the ocean's surface and a treatment unit 320 for treating the oil recovered by spilled oil recovery unit 310 are loaded on this ship 300.

Spilled oil recovery unit 310 comprises a spilled oil suction unit 312 for suctioning up oil floating on the ocean's surface using a suction pipe 311, a storage tank 313 for storing recovered oil mixed with seawater (oil/water mixture) 121 that has been taken up by spilled oil suction unit 312, and a recovered oil transfer unit 315 for gradually transferring the appropriate amount of recovered oil 121 inside storage tank 313 through a recovered oil transfer pipe 314 to a treatment unit 320.

Treatment unit 320 is designed similar to treatment unit 100 described in Figures 1 through 6. In essence, treatment unit 320 comprises emulsification unit 100 and combustion unit 200, as shown in Figures 1 and 2. However, recovered oil transfer pipe 314 of spilled oil recovery unit 210 is connected to starting material tank 111 of starting material feed system 110 of emulsification unit 100 such that the recovered oil 121 recovered from the ocean's surface by spilled oil recovery unit 310 flows into starting material tank 111. Moreover, combustion unit 200 is an internal combustion engine, turbine, boiler, and similar units of boat 300.

By means of boat 300, oil spilled onto the ocean's surface is recovered, this recovered oil 121 is emulsified at the appropriate oil/water mixture ratio by adding heavy oil 122 and water 123, and this emulsion is subjected to combustion treatment by combustion unit 200. The recovered oil 121 recovered on board the boat can be emulsified without the use of a surfactant and can be subjected to combustion on board the boat; therefore, it is possible to efficiently treat recovered oil 121 at a very low cost.

Moreover, by using emulsion 124 produced from recovered oil 121 as the fuel for the internal combustion engine or similar unit of boat 300, the fuel consumption of boat 300 is reduced and the cost of spilled oil recovery and treatment can be reduced.

### Industrial Applicability

By means of the method and apparatus for treating an oil/water mixture of the present invention, it is possible to emulsify an oil/water mixture without using an emulsifier and to subject the emulsion to combustion treatment; therefore, it can be used not only for oil recovered from the ocean's surface and similar areas, but also for other waste oils, such as used tempura oil, and the like. By means of the method of treating an oil/water mixture of the present invention, it is possible to mix water and any combustible substance that has poor compatibility with water without using an emulsifier and to subject the emulsion to combustion treatment; therefore, it is applicable not only to oil, but to any combustible substance.

Moreover, by means of the method and apparatus for treating an oil/water mixture of the present invention, it is possible to continuously feed large amounts of an oil/water mixture to an internal combustion engine, turbine, boiler, or similar unit for combustion; therefore, they are applicable not only to a boat, but also to the internal combustion engine of an automobile and the turbine of a generator.

## Claims

1. A method of treating an oil/water mixture, **characterized in that** an oil/water emulsion is produced by discharging an oil/water mixture, wherein oil and water coexist, from a liquid discharge nozzle as it is being crushed by a high-speed air current sprayed from an air jet orifice disposed around the liquid discharge nozzle, and this emulsion is subjected to combustion by a combustion unit.

2. The method of treating an oil/water mixture according to claim 1, further **characterized in that** the air jet orifice is formed around the liquid discharge nozzle in order to generate an eddy from the high-speed air current that will flow such it encloses the oil/water mixture discharged from the liquid discharge nozzle.

3. The method of treating an oil/water mixture according to claim 1 or 2, further **characterized in that** the combustion unit is an internal combustion engine, turbine, or boiler.

4. An apparatus for treating an oil/water mixture, **characterized in that** it comprises an emulsification unit for producing an oil/water emulsion by discharging an oil/water mixture, wherein oil and water coexist, from a liquid discharge nozzle as it is being crushed by a high-speed air current sprayed from an air jet orifice disposed around the liquid discharge nozzle and
a combustion unit for combustion of the emulsion produced by the emulsification unit.

5. The apparatus for treating an oil/water mixture according to claim 4, further **characterized in that** the air jet orifice is formed around the liquid discharge nozzle in order to generate an eddy from the high-speed air current that will flow such that it encloses the oil/water mixture discharged from the liquid discharge nozzle.

6. The apparatus for treating an oil/water mixture according to claim 3 or 4, further **characterized in that** the combustion unit is an internal combustion engine, turbine, or boiler.

7. The apparatus for treating an oil/water mixture according to claim 6, further **characterized in that** the internal combustion engine is an automobile engine, the turbine is a turbine for driving a generator, and the boiler is a steam generator for feeding high-pressure steam to a steam turbine.

8. A boat, **characterized in that** it comprises a spilled oil recovery unit for the recovery of oil spilled onto natural waters as an oil/water mixture;
an emulsification unit for producing an oil/water emulsion by discharging an oil/water mixture from a liquid discharge nozzle as it is being crushed by a high-speed air current sprayed from an air jet orifice disposed around the liquid discharge nozzle; and
a combustion unit for the combustion of the emulsion produced by the emulsification unit.

9. The boat according to claim 8, further **characterized in that** the air jet orifice is formed around the liquid discharge nozzle in order to generate an eddy from the high-speed air current that will flow such that it encloses the oil/water mixture discharged from the liquid discharge nozzle.
